# EUROPÄISCHE PATENTSCHRIFT

(11) **EP 2 867 624 B1**
(45) Veröffentlichungstag und Bekanntmachung des Hinweises auf die Patenterteilung: **07.12.2016**
(21) Anmeldenummer: 13739605.7
(22) Anmeldetag: 26.06.2013
(51) Int. Cl.: G01D 5/245

(54) **MEHRKANALIGER DREHWINKELGEBER**
MULTI-CHANNEL ANGULAR POSITION SENSOR
DETECTEUR D'ANGLE DE ROTATION MULTI-CANAUX

(30) Priorität: 28.06.2012 DE 102012012870
(43) Veröffentlichungstag der Anmeldung: 06.05.2015
(73) Patentinhaber: Hengstler GmbH, 78554 Aldingen (DE)
(72) Erfinder: BÜCHER, Johann, 78554 Aldingen (DE); GRIGO, Uwe, 78166 Donaueschingen (DE); KLAIBER, Wolfgang, 78595 Hausen ob Verena (DE); LINDEN, Martin, 78669 Wellendingen (DE)
(74) Vertreter: Riebling, Peter
(86) Internationale Anmeldenummer: PCT/EP2013/001877
(87) Internationale Veröffentlichungsnummer: WO 2014/000885

(56) Entgegenhaltungen:
- EP-A1- 2 233 889
- DE-A1- 10 360 042
- US-A1- 2001 006 344
- US-B2- 7 244 929

## Beschreibung

Die Erfindung betrifft einen mehrkanaligen Drehwinkelgeber nach dem Oberbegriff des Patentanspruchs 1.

Es ist eine Vielzahl von Drehwinkelgebern unterschiedlichster Bauarten und Funktionen bekannt. Die Erfindung betrifft demnach Drehwinkelgeber, die nach dem optischen Abtastungsprinzip einer mehrkanaligen, codierten Scheibe arbeiten, aber auch Drehwinkelgeber, die kapazitiv oder induktiv oder magnetisch arbeiten.

Zur sicheren Übertragung der vom Drehwinkelgeber erzeugten Signale ist es bekannt, den Drehwinkelgeber mehrkanalig auszubilden. Dies bedeutet, dass die eine Art des Messsignals über einen ersten Kanal und über eine andere Art des Messsignals über einen 2. Kanal an eine Kontrolleinheit übertragen wird. Die Erfindung ist im Übrigen nicht auf einen zweikanaligen Drehwinkelgeber beschränkt. Die Erfindung betrifft deshalb auch Drehwinkelgeber, die mehr als 2 Kanäle zu Übertragung der Messdaten aufweisen. Lediglich der einfacheren Beschreibung wegen wird in der folgenden Beschreibung von einer zweikanaligen Messdaten-Übertragung ausgegangen, obwohl die Erfindung nicht darauf beschränkt ist.

Bei solchen Drehwinkelgeber steht bei der Art und der Verwendung der verwendeten Leiterplatte der Gesichtspunkt der Kosteneinsparung, des Bauplatzbedarfes und der sicheren Datenübertragung im Vordergrund.

Es ist bisher lediglich bekannt, bestimmte Funktion zu Bau- oder Funktionseinheiten eines Drehgebers auf einer Leiterplatte mit getrennten Bauteilen anzuordnen, was den Nachteil hat, dass die lediglich über die Leiterbahnen der Leiterplatte elektrisch miteinander verbundenen Bauteile mechanisch beschädigt werden können oder deren Kontaktierung unsicher ist, so dass eine Ableitung der Messesignale an eine nachgeschaltete Kontrolleinheit zu unsicheren Ergebnissen führen kann. Solche Bauteile sind in der Regel hoch-integrierte Bausteine (Chips), die als ASIC ausgebildet sind.

US 7 244 929 B2 offenbart ein Verfahren zum Betrieb eines mehrkanaligen Drehwinkelgebers mit mindestens einer Leiterplatte, auf der eine oder mehrere Funktionseinheiten als integrierte Bauteile angeordnet und miteinander verschaltet sind, wobei mindesten ein Positionswandler absolute und inkrementelle Messwerte erzeugt, die jeweils über mindestens einen Kanal einer Kontrolleinheit zugeführt werden, welche als Regelungs- und Sicherheitsüberwachung ausgebildet ist und eine nachgeschaltete Maschine steuert.

EP 2 233 889 A1 offenbart en Verfahren zur redundanten Erfassung von Drehwinkelmesswerten. Es ist eine doppelte Sensorstruktur für eine direkte Erfassung von zwei Messwerten offenbart.
US 2001/006344 A1 offenbart ein ähnliches Verfahren mit redundanter Erfassung von Drehwinkelmesswerten, wobei absolute Werte und inkrementelle Werte verglichen werden.

Die Erfindung liegt die Aufgabe zu Grunde, die verschiedenen Funktionseinheiten eines mehrkanaligen Drehwinkelgebers der eingangs genannten Art so weiterzubilden, dass bei erhöhter Sicherheit der Datenübertragung eine Einsparung von Kosten und eine Minimierung des Bauplatzbedarfes der Leiterplatte des Drehwinkelgebers erfolgen kann.

Zur Lösung der gestellten Aufgabe ist die Erfindung durch die technische Lehre der Ansprüche gekennzeichnet.

Wesentliches Merkmal der Erfindung ist, dass verschiedene Funktionseinheiten des Drehwinkelgebers zusammengefasst werden und dadurch ein höherer Integrationsstand ermöglicht wird, was im Sinne von Kosten und Platz eine bessere Lösung ermöglicht.

Insbesondere geht um einen zwei- oder mehrkanaligen Drehwinkelgeber, der dazu benutzt werden soll im Sinne von funktionaler Sicherheit den Antrieb einer sicheren Maschine zu gewährleisten. Es soll festgestellt werden, ob mögliche Fehler im kompletten System vorhanden sind. Das System besteht aus dem Drehwinkelgeber und der Maschine, z.B. einer Werkzeugmaschine oder eine andere Produktionsmaschine.

Ein nach der Erfindung angestrebtes, sicheres System soll erkennen, ob der Drehwinkelgeber falsche Informationen an die Kontrolleinheit übermittelt und dadurch ein unsicherer Zustand in der Gesamtmaschine entstehen würde. Es stehen deshalb zwei Kanäle zur Verfügung, die dann auf der Kontrollseite (CU= control unit) ausgewertet werden und mit bestimmten Vergleichsmechanismen kann erkannt werden, dass einer der beiden Kanäle oder beide Kanäle korrupt oder fehlerhaft sind.

### 1. Ausführungsbeispiel: Aufteilung in drei Funktionseinheiten

In einer ersten Ausführung besteht das sichere System nach der Erfindung aus drei Funktionseinheiten, wobei Funktionseinheit 1 und Funktionseinheit 3 die Sensorfunktionsgruppen sind, welche die beiden unabhängigen Kanäle realisieren. Die Funktionseinheit 2 ist ein Interface, das die Daten über beide voneinander unabhängige Kanäle zur Auswertung in die Kontrolleinheit übermittelt.

Wichtig bei dieser Ausführung und allen anderen Ausführungen ist, dass jede Funktionseinheit ein getrenntes Bauteil (z.B. in der Ausbildung als ASIC) ist und die genannten drei Bauteile bevorzugt auf einer gemeinsamen Leiterplatte angeordnet sind.

Bezogen auf das erste Ausführungsbeispiel ist vorgesehen, dass die Trennung der beiden Kanäle bei der Meßwerterfassung und deren Aufbereitung in voneinander getrennten Bauteile (Funktionseinheit 1 und 3) erfolgt, wobei ein drittes Bauteil (Funktionseinheit 2) verwendet wird, das als blosses Interface lediglich die Weiterleitung der beiden Kanäle an die CU vornimmt.

### 2. und 3. Ausführungsbeispiel: Aufteilung in zwei Funktionseinheiten

In einer zweiten Ausführung besteht das sichere System nach der Erfindung aus zwei Funktionseinheiten, wobei Funktionseinheit 1 und Funktionseinheit 2 die Sensorfunktionsgruppen sind, welche die beiden unabhängigen Kanäle realisieren. Die Funktionseinheit 2 ist aber gleichzeitig als Interface ausgebildet, das diese Daten zur Auswertung an die Kontrolleinheit übermittelt.

In einer bevorzugten Ausgestaltung ist in den Funktionseinheiten 1 und 2 jeweils eine Diagnostikeinheit implementiert.

Eine solche Diagnostikeinheit ist jeweils einem Meßwertkanal zugeordnet und führt eine Vielzahl von Prüfungen der auf diesem Kanal erfassten Messwerte durch. Hierunter fallen, z. B. Speicherteste oder Checksum-Berechnungen.

Die singuläre Untersuchung der Daten eine Kanals lässt noch nicht erkennen, welcher der Kanäle korrupt ist. Man kann nur erkennen, dass die Daten nicht stimmig sind. Mit dem Vergleich der beiden Kanäle erkennt man nur, dass die Daten nicht zusammenpassen.

Der Vergleich der beiden Kanäle findet in der CU statt, an der die beiden Kanäle zusammengeführt werden. Wird in der CU eine Abweichung der Daten des einen Kanals von den Daten des anderen Kanals erkannt, kommt es zu einer Abschaltung der Maschine bzw. die Maschine geht in den sicheren Zustand über. Dazu werden die Antriebe entweder stromfrei gesetzt oder Bremsen werden aktiviert, so dass keine gefahrbringende Bewegung mehr von der Maschine ausgehen kann.

Vorteil der Erfindung ist, dass keine Entscheidung in der CU stattfindet, welcher der Kanäle redundante Daten liefert und welcher nicht, sondern dass alles in einem einzigen Positionsmesssystem zusammengefasst ist und man deshalb auf außen liegende Sensoren und dergleichen verzichten kann.

Das gesamte mehrkanalige Meßwerterfassungssystem ist in einer einzigen Einheit - bevorzugt in einer einzigen Leiterplatte mit einer darauf installierten Anzahl von Funktionseinheiten, die als ASICs ausgebildet sind, integriert.

Es handelt sich also um eine mindestens zweikanalige Einheit, bei der zwei Kanäle zueinander redundant sind und zueinander redundante Daten liefern.

Der Unterschied zwischen dem ersten und dem zweiten Ausführungsbeispiel besteht darin, dass beim zweiten Ausführungsbeispiel ein höherer Integrationsgrad erreicht wird.

Beim zweiten Ausführungsbeispiel entfällt die separate Funktionseinheit 3. Diese Funktionseinheit 3 ist vielmehr in der Funktionseinheit 2 integriert. Wo beim ersten Ausführungsbeispiel die 3. Funktionseinheit als reines Durchleitungs-Interface ausgebildet war, sieht das zweite Ausführungsbeispiel eine höhere Integration vor, nämlich, dass in die 3. Funktionseinheit, die als Interface dient, nunmehr auch die 2. Funktionseinheit integriert ist.

Für alle Ausführungsbeispiele gilt, dass man aus dem eigentlichen Sensor (der optisch, magnetisch, kapazitiv oder induktiv ausgebildet sein kann) zwei unterschiedliche Drehwinkel- oder Längen-Informationen gewinnt. Der eine Kanal ist den absoluten Messwerten und der zweite Kanal ist den inkrementalen Messwerten zugeordnet. Der inkrementale Kanal wird an den (Interface-)Funktionsblock 2 weitergeleitet und wird dort erst zu einer Lageinformation mit den nötigen Diagnoseinformationen aufbereitet.

Der Kanal 1 bleibt nach wie vor in der Funktionseinheit 1 integriert, der die Absolutsignalwerte liefert, und diese Information werden zusammen mit einer die Messwerte auswertenden Diagnose in der Funktionseinheit 1 erstellt. Die Informationen werden dann nach dem Black-Channel-Prinzip durch den Interface-Block (Funktionseinheit 2) hindurchgeleitet und zur Auswertung an die CU geleitet.

In jedem der Funktionseinheiten werden auf jeweils voneinander elektrisch getrennten Kanälen, der Positionswert des Drehwinkelgebers zweimal gebildet.

Damit ist sichergestellt, dass gleichartige Fehler auf den beiden Kanälen nicht unbemerkt ausgewertet werden. Aus diesem Grund werden erfindungsgemäß die beiden Meßwert-erfassenden Funktionsblöcke in getrennten ASICs implementiert.

Würde man hingegen die beiden Messwert erfassenden Funktionsblöcke in einem einzigen ASIC implementieren, können sich die beiden Funktionsblöcke in dem einzigen ASIC gegenseitig stören und beeinflussen.

Es besteht dann die Gefahr, dass gleichartige Fehlerquellen (Common course), entstehen, die unbemerkt zu einer Veränderung der Informationen führen, die nachher in der CU nicht mehr erkannt werden können.

Die Erfindung sieht deshalb vor, dass die Meßwerterfassung und die Diagnose in voneinander räumlich und elektrisch voneinander getrennten Bauteilen erfolgen. Es handelt sich also um zwei unabhängige Messwerterzeugungen.

Die Auswertung der ersten Messwerterzeugung wird durch den zweiten Funktionsblock hindurchgeleitet, so dass die beiden Kanäle in der CU redundant ankommen und die gleichen Werte aufweisen.

Die Kontrolleinheit führt die Kontrolle des Antriebs durch und leistet eine sichere Auswertung, die erkennt, ob hier irgendwelche Fehler vorhanden sind. Sobald Fehler vorhanden sind, wird die nachgeschaltete Maschine abgeschaltet.

Beim zweiten und dritten Ausführungsbeispiel ist kennzeichnend, dass der Kanal 2 jetzt in den Interface-Baustein hinein verlegt ist. Man achtet jedoch darauf, dass man weitgehend digitale Funktionalitäten benutzen kann, um den Kanal 2 zu bilden und damit nicht mehr auf die analoge Technologie eines typischen Sensorbasic-Bausteins angewiesen ist.

Die Erfindung liegt demnach darin, dass man den zweiten Funktionsblock der Meßwerterfassung und den Interface-Block in einer Einheit zusammenführt und dadurch den Interface-Block intelligenter macht und dort die Messwertauswertung und Messwertaufbereitung des zum ersten Kanal im 1. Funktionsblock redundanten Messwertes durchführt und die beiden Messwerte danach in der CPU vergleichen lässt. Dass heißt, der Interface-Baustein wird komplexer ausgebildet und erhält die Funktionen der Meßwerterfassung und Diagnose des zweiten Funktionsblocks.

### 4. Ausführunsgbeispiel: Aufteilung in einer einzigen Funktionseinheit

Im dritten Ausführungsbeispiel werden die beiden zueinander redundanten Messwerte in jeweils einem Kanal in einem einzigen Bauteil (ASIC) zusammengefasst. Vorteil dieser Maßnahme ist eine wesentlich Einsparung von Platz und Raumbedarf und eine hohe Integrationsdichte.

### 5. und 6. Ausführungsbeispiel: Aufteilung der ersten Funktionseinheit in zwei Funktionseinheiten

Im 5. und 6. Ausführungsbeispiel erfolgt eine Aufspaltung der ersten Funktionseinheit in zwei Funktionseinheiten 1 a und 1 b, sowie Integration der Funktionseinheit 3 in den Interface-Baustein.

7. Ausführungsbeispiel: Aufspaltung der ersten Funktionseinheit in drei Funktionseinheiten 1 a, 1b und 1 c, sowie Integration der Funktionseinheit 3 in den Interface-Baustein.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von mehreren Ausführungswege darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
Figur 1: eine erste Ausführung der Aufteilung der Meßwerterfassung in drei Funktionsblöcke
Figur 2: eine Abwandlung der ersten Ausführung der Aufteilung der Meßwerterfassung in drei Funktionsblöcke
Figur 3: eine zweite Ausführung der Aufteilung der Meßwerterfassung in zwei Funktionsblöcke
Figur 4: eine dritte Ausführung der Zusammenfassung der Meßwerterfassung in einem einzigen Funktionsblock
Figur 5: eine vierte Ausführung der Aufteilung der Meßwerterfassung in drei Funktionsblöcke
Figur 6: eine Abwandlung der vierten Ausführung der Aufteilung der Meßwerterfassung in drei Funktionsblöcke
Figur 7: eine fünfte Ausführung der Aufteilung der Meßwerterfassung in vier Funktionsblöcke

Anhand eines optischen Drehgebers soll zunächst als Ausführungsbeispiel die Funktion der Erfindung erläutert werden.

Es wird davon ausgegangen, dass eine Drehwelle mit einem zu messenden Objekt drehfest verbunden ist und die Drehwelle mit einer optischen Scheibe verbunden ist, welche eine optische Codierung trägt.

Es ist bekannt, die Scheibe so zu codieren, dass eine Spur die inkrementalen Messwerte ausgibt, währenddessen links und rechts von der inkrementalen Spur absolute Codierspuren vorhanden sind, über welche - unabhängig voneinander - Absolutmesswerte erfasst werden.

Die Erfassung erfolgt beispielsweise durch eine optische Ausleseeinheit, bei der mit einer ersten Erfassungseinrichtung die inkrementalen Messwerte erfasst werden, um mit zwei anderen Erfassungseinrichtungen (z. B. Fotodioden) die beiden unabhängig voneinander erfassten, jedoch gleichen Absolutwerte des Drehwinkels erfasst werden.

Es werden also unabhängig voneinander zwei zueinander redundante Absolutlagewerte des Positionsmessgebers erfasst und ein hierzu redundanter inkrementaler Lagewert.

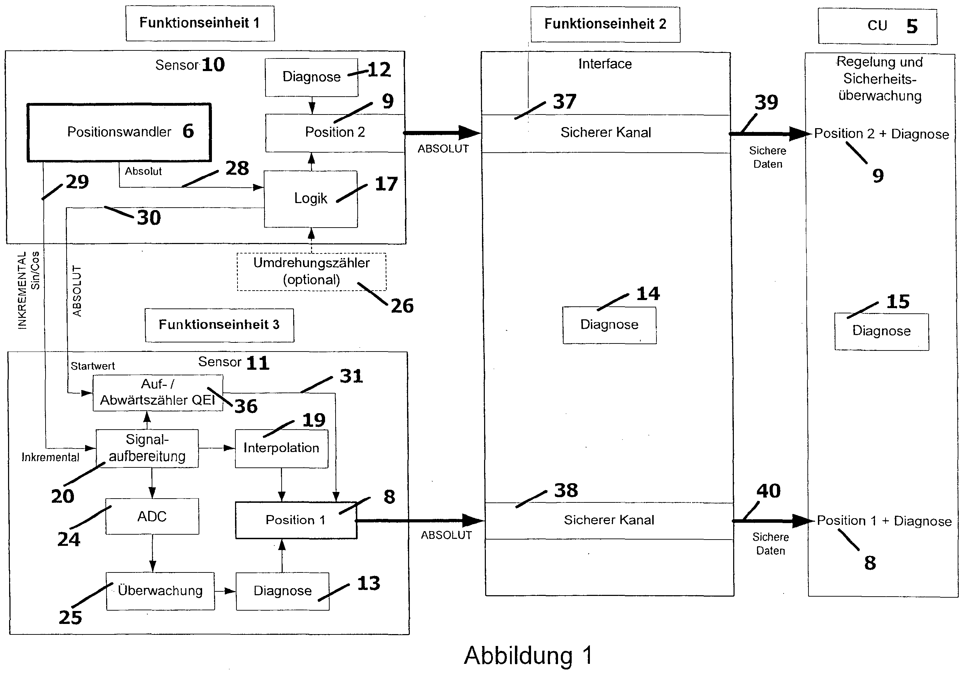

Der erste absolute Lagewert wird beispielsweise zur Berechnung der Lageposition 9 in Figur 1 verwendet, während der zweite, hierzu redundante, aber unabhängig vom ersten Lagewert erfasste zweite absolute Lagewert zur Berechnung der Lageposition 8 nach Figur 1 verwendet wird.

Statt der Ableitung von zwei zueinander redundanten, aber unabhängig hiervon gewonnenen absoluten Lagewerten reicht es nach Figur 1 auch aus, lediglich einen einzigen absoluten Lagewert in den Positionswandler 6 zu ermitteln, der über einen anderen Kanal auch den inkrementalen Lagewert ermittelt.

Der Sensor 10 nach Figur 1 besteht dem gemäß aus einem Positionswandler 6, der vorstehend als Ausleseeinheit einer optisch abgetasteten Codierscheibe beschrieben wurde, worauf die Erfindung jedoch nicht beschränkt ist.

Es versteht sich von selbst, dass der Sensor 10 auch nach dem induktiven, kapazitiven oder magnetischen Prinzip arbeiten kann.

Wichtig ist, dass dem Sensor 10 der Positionswandler 6 zugeordnet ist, der über den inkrementalen Pfad 29 die inkrementalen Messwerte, die von der Funktionseinheit 1 die getrennte Funktionseinheit 3 einspeist und dort einer Signalaufbereitung 20 zuführt.

Die absoluten Messwerte werden über den Pfad 28 einer Logik 17 in der Funktionseinheit 1 eingespeist, und es wird dort ein Startwert auf dem Absolutpfad 30 erzeugt, der einen Auf- oder Abwärtszähler 36 ansteuert.

Es handelt sich hierbei um ein Quadratur-Encoder-Interface, das als Zähler aufgebaut ist und über den Pfad 30 einen Startwert von der Logik 17 erhält, in welche die Absolutlagewerte über den Pfad 28 eingespeist werden.

Der Auf-/Abwärtszähler 36 zählt somit die an der Signalaufbereitung 20 anliegenden inkrementalen Messwerte und speist diese über den Pfad 31 der Lageposition 8 ein, die hieraus einen absoluten Lagewert berechnet.

Die Berechnung erfolgt über den Ausgang der Signalaufbereitung 20, die auf einen Intapolationsbaustein 19 einwirkt und andererseits über den Ausgang der Signalaufbereitung 20, die über einen Analog-Digital-Converter (ADC 24) die inkrementalen Werte digitalisiert, einer Überwachung 25 zuführt, die ihrerseits auf eine Diagnose 13 geschaltet ist, deren Ausgang in den Baustein zur Berechnung des Absolutlagewertes bei der Lageposition 1 einbezogen wird.

Wichtig ist also, dass getrennt von der Funktionseinheit 1 eine Funktionseinheit 3 angeordnet ist, in der aus den Inkrementalwerten, die von den in der Funktionseinheit 1 angeordneten Positionswandler 6 gewonnen wurden und dass aus diesen Inkrementalwerten wiederum absolute Werte errechnet werden, die demzufolge auf einem anderen Rechnungsweg zustande kamen, also vergleichsweise die in der Lageposition 9 erfassten redundanten absoluten Lagewerte.

Auch diesem Baustein der Lage-Position 2 ist eine Diagnose 12 zugeordnet und die Logik 17, an die optional noch ein Umdrehungszähler 26 (Multiturn) angeschlossen werden kann, um volle Umdrehungen zu erfassen.

Beim Ausführungsbeispiel nach Abbildung 1 ist ferner wesentlich, dass die beiden Funktionseinheiten 1 und 3 auf unabhängigen Wegen zwei zueinander redundante Absolut-Lagewerte erzeugen, die auch unabhängig voneinander über jeweils sichere Kanäle 37, 38 durch eine als Interface ausgebildete Funktionseinheit 2 hindurchleiten.

Die Funktionseinheit 2 ist praktisch nur mit einer Diagnose 14 versehen und dient lediglich zur Ausbildung von zwei zueinander parallelen sicheren Kanälen 37, 38, ohne dass dort eine Rechenleistung angesiedelt ist. Demzufolge kann die Funktionseinheit 2 als kostengünstiger Baustein ausgebildet werden, der auf dem Markt als Rechen-Baustein zur Verfügung steht, und die gesamte Schaltung nach dem Ausführungsbeispiel der Abbildung 1 kann deshalb besonders kostengünstig aufgebaut werden.

Die Durchleitung durch die Funktionseinheit 2 in Form von zwei zueinander parallelen und funktional voneinander getrennten sicheren Kanälen 37, 38 führt dazu, dass über die sicheren Kanäle 37, 38 die voneinander getrennten sicheren Daten 39, 40 der Kontrolleinheit 5 zugeführt werden, die als Regelung und Sicherheitsüberwachung ausgebildet ist. Dort werden die in den Lagepositionen 8 und 9 erfassten absoluten Werte getrennt voneinander behandelt, gegebenenfalls einer Diagnose 15 unterworfen und miteinander verglichen.

Kommt es zu einer Abweichung der zueinander redundanten Lagepositionen 8, 9, dann schaltet die Kontrolleinheit 5 über einen nicht näher dargestellten Pfad die nachgeschaltete Maschine ab.

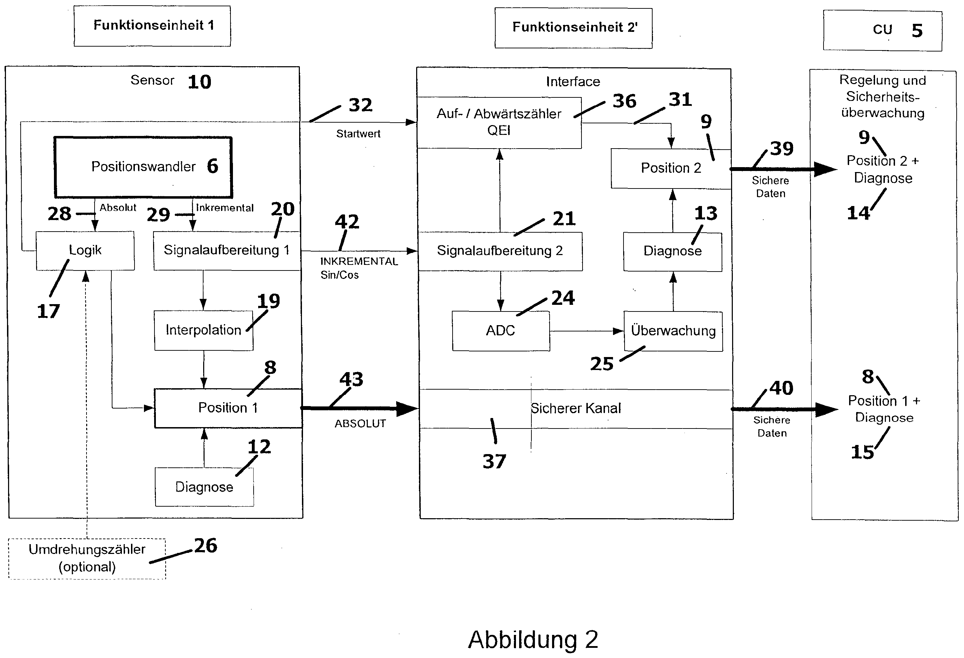

Das Ausführungsbeispiel 2 in der Abbildung 2 unterscheidet sich von dem Ausführungsbeispiel der Abbildung 1 insoweit, als dass komplett die Funktionseinheit 3 als getrennter ASIC-Baustein entfällt und stattdessen die Funktionseinheit 3 in der Funktionseinheit 2 als neue Funktionseinheit 2' integriert ist.

Damit wird der in der Abbildung 1, im ersten Ausführungsbeispiel gezeigte Inter-face-Block der Funktionseinheit 2 mit einer höheren Intelligenz angereichert, denn erfindungsgemäß besteht nun dieses Ausführungsbeispiel nach Abbildung 2 darin, dass alle Teile der Funktionseinheit 3 in der Funktionseinheit 2 integriert sind.

Es gelten demzufolge für die gleichen Teile die gleichen Bezugszeichen. Kennzeichnend für dieses Ausführungsbeispiel ist, dass lediglich nur noch ein sicherer Kanal 37 vorhanden ist, weil nur der eine Kanal von der Lageposition 8 hindurchgeleitet wird und die absoluten Messwerte 43 über den sicheren Kanal 37 als sichere Daten 40 der Kontrolleinheit 5 zugeführt werden.

Nachdem die Funktionseinheit 3 nach der Abbildung 1 nun in der Funktionseinheit 2' integriert ist, bedarf es des anderen sicheren Kanals 37 nicht mehr. Vielmehr erfolgt die Bildung der Lageposition 9 über die vorher anhand der Funktionseinheit 3 beschriebenen Bausteine, und am Ausgang der Lageposition 9 werden deshalb sichere Daten 39 der Kontrolleinheit 5 zugeleitet.

Mit dem gegebenen Ausführungsbeispiel besteht der Vorteil, dass gegenüber dem Ausführungsbeispiel nach Abbildung 1 ein höherer Integrationsgrad erzielt wird, dementsprechend auch geringerer Bauplatzbedarf vorhanden ist und lediglich statt dreier Funktionseinheiten nur noch zwei Funktionseinheiten vorhanden sind.

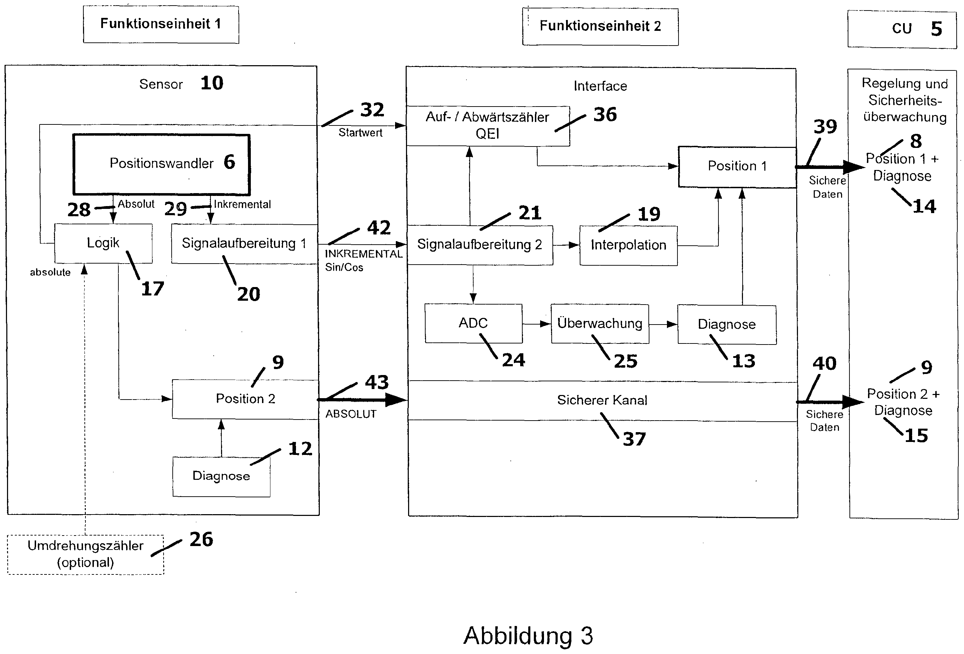

Das Ausführungsbeispiel nach der Abbildung 3 stimmt im Wesentlichen mit dem Ausführungsbeispiel nach Abbildung 2 überein, nur dass angegeben ist, dass in der Funktionseinheit 1 die Lageposition 9 erfasst und berechnet wird, während in der Funktionseinheit 2" die Lageposition 1 die Lageposition 8 durch Berechnung aus den inkrementalen Messwerten 42 in Verbindung mit einem Startwert 32 an den Auf-/Abwärtszähler 36 erfolgt.

Ansonsten gelten für die gleichen Teile die gleichen Bezugszeichen und dementsprechend auch die gleiche Beschreibung.

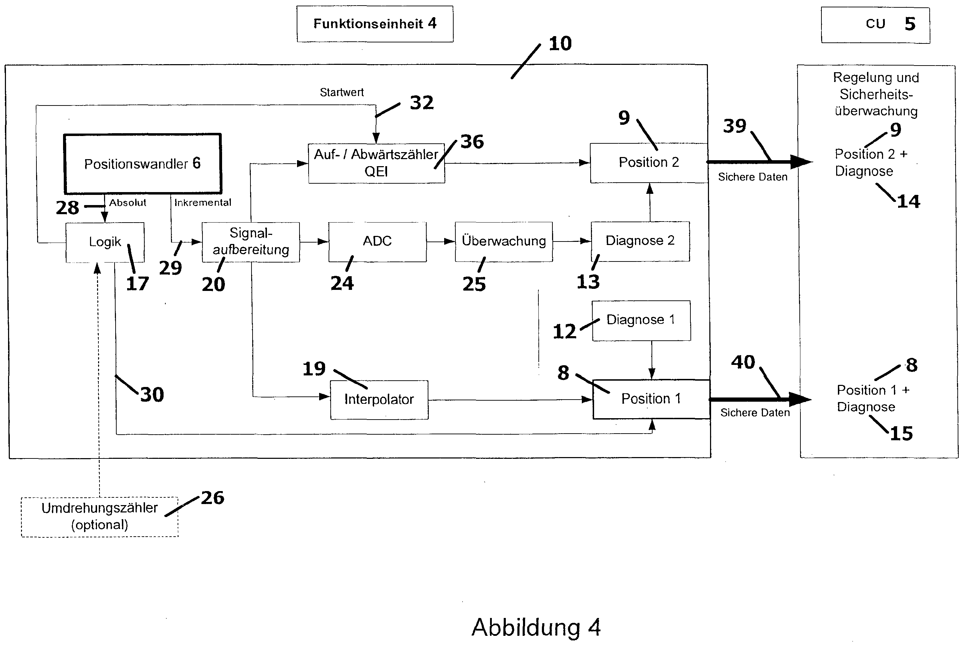

Im Ausführungsbeispiel nach Abbildung 4 ist vorgesehen, dass eine neuartige Funktionseinheit 4 geschaffen ist, die aus den Funktionseinheiten 1 und 2' der Abbildungen 2 und 3 gebildet ist.

Es ist also lediglich eine einzige Funktionseinheit vorhanden, die alle vorhergehenden Ausführungsbeispiele nach den Abbildungen 1 bis 3 in sich vereinigt.

Kennzeichnend für die Funktionseinheit 4 ist, dass in einem einzigen Baustein unabhängig voneinander die Lagepositionen 8 und 9 erfasst und/oder berechnet werden und als zueinander redundante, sichere Daten 39, 40 der Kontrolleinheit 5 zugeleitet werden.

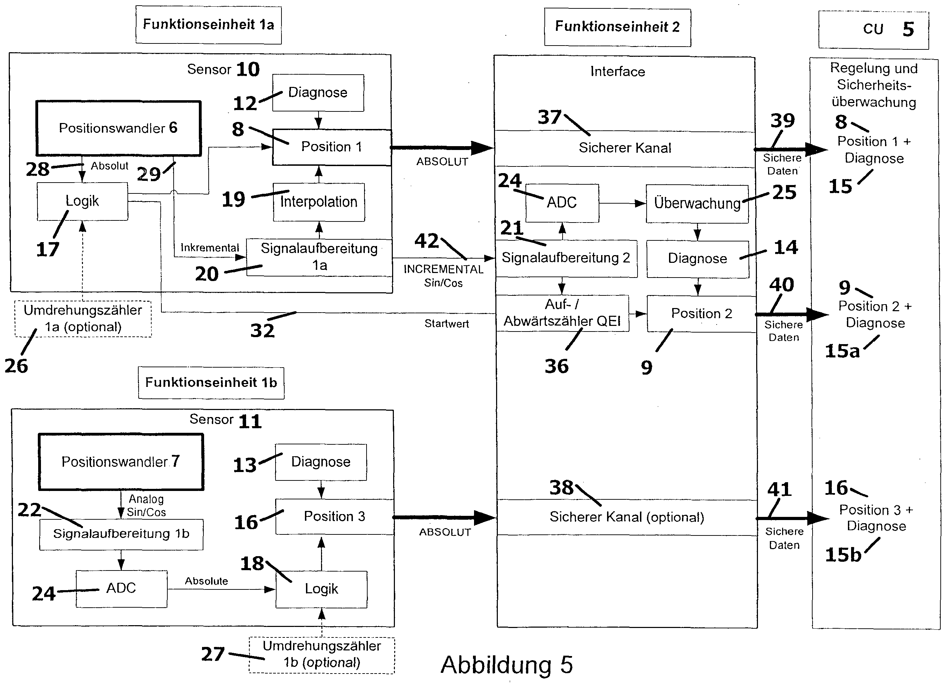

Das Ausführungsbeispiel nach Abbildung 5 unterscheidet sich von dem Ausführungsbeispiel nach Abbildung 1 dadurch, dass eine Funktionseinheit 1a den Positionswandler 6 aufnimmt und die Lageposition 8 als Absolutwert ausgibt.

Unabhängig von dem Positionswandler 6 ist jedoch ein zweiter Positionswandler 7 vorgesehen, der unabhängig von dem Positionswandler 6 arbeitet. Die Ableitung von zwei Absolut-Messwerten von einer optisch codierten Scheibe wurde als Ausführungsbeispiel zu Beginn der Zeichnungsbeschreibung erwähnt.

Bezogen auf dieses Ausführungsbeispiel erfasst dann der Positionswandler 6 den einen Absolutwert auf der Scheibe, der in einer Spur der Codierscheibe angeordnet ist, während der Positionswandler 7 auf der anderen Spur die Absolutwerte der Codierscheibe erfasst.

Es handelt sich also um zwei unabhängig voneinander arbeitende Positionswandler 6 und 7.

Dementsprechend wird von dem Positionswandler 6 die Lageposition 8 erzeugt, während von dem Positionswandler 7 die Lageposition 16 erzeugt wird.
Beide Lagewerte werden wiederum als Absolutwerte der Funktionseinheit 2 zugeführt, die über zwei sichere Kanäle 37, 38 die redundanten absoluten Lagewerte als sichere Daten 39, 41 an die Kontrolleinheit 5 weiterleitet.

Wichtig bei diesem Ausführungsbeispiel ist, dass auch die als Interface geschaltete Funktionseinheit 2 höher integriert ist und eine Rechenschaltung zur Berechnung der Lageposition 9 aus den inkrementalen Messwerten 42 in Verbindung mit dem Auf-/Abwärtszähler 36 und dem ADC 24 aufweist.

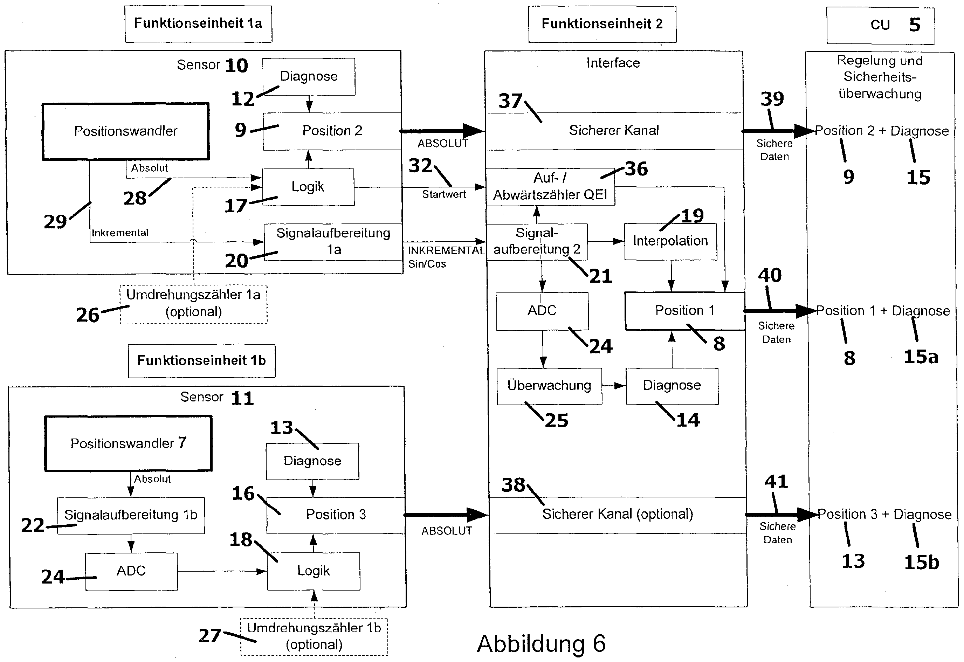

Die Abbildung 6 zeigt in analoger Weise zur Abbildung 5 lediglich die Umkehrung, dass in der Funktionseinheit 2 nunmehr die Lageposition 8 durch Berechnung aus den Inkrementalwerten gewonnen wird, während die absolute Lageposition 9 vom Positionswandler 6 erfasst und ausgegeben wird.

Ansonsten gelten für die gleichen Teile die gleichen Bezugszeichen und deren Beschreibung.

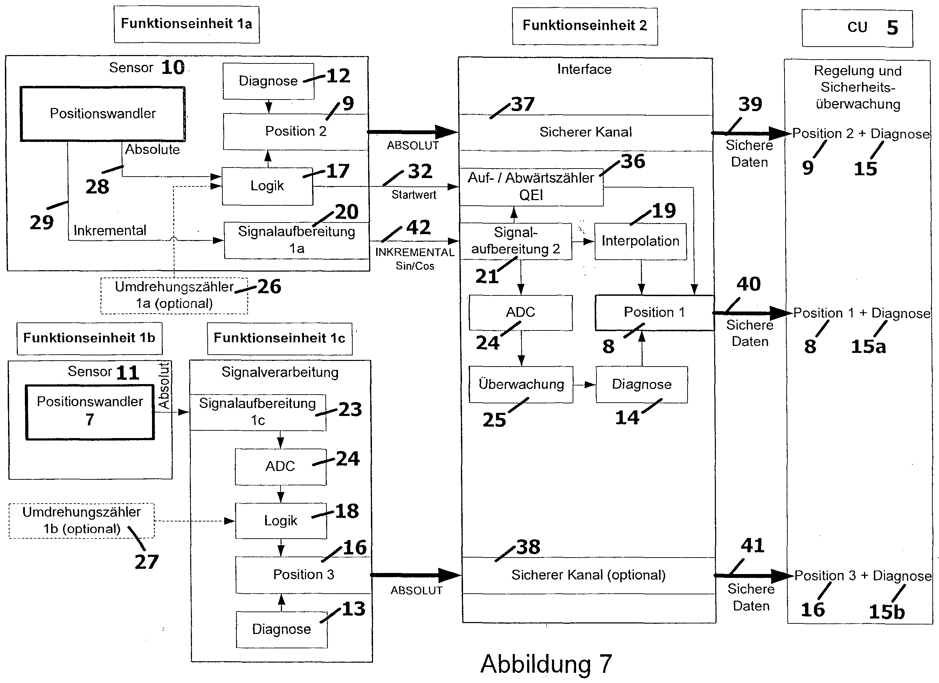

Das Ausführungsbeispiel nach Abbildung 7 unterscheidet sich von dem vorgenannten Ausführungsbeispiel dadurch, dass insgesamt die Funktionseinheit 1 in drei unterschiedliche Funktionseinheiten 1 a, 1 b und 1 c unterteilt ist.

Während in der Abbildung 5 und 6 die Funktionseinheit 1 lediglich in die Funktionseinheiten 1 a und 1 b unterteilt war, ist nach Abbildung 7 eine Aufteilung in die Funktionseinheiten 1 a, 1 b und 1 c vorgesehen.

Dies bedeutet, dass jeder Funktionseinheit 1 a, 1 b, 1 c, 2 ein eigener Baustein (ASIC) zugeordnet ist und insgesamt dann vier Bausteine auf einer Leiterplatte angeordnet sind und elektrisch verschaltet sind.

Wegen der Aufteilung der Funktionseinheit 1 in insgesamt drei Unterfunktionseinheiten 1 a, 1b und 1 c ist es notwendig, in der Funktionseinheit 1 c ausgehend von der Signalaufbereitung 23 einen ADC 24 anzuschließen, der seine Signale über eine Logik 18 zur Berechnung des Absolutwertes der Lageposition 16 eingibt.

Diese Lageposition 16 wird noch von einer Diagnose 13 überprüft.

Es sind demzufolge auch zwei Sensoren 10, 11 vorhanden, genau wie dies bei den Abbildungen 5 und 6 der Fall war. Im Unterschied zu den Abbildungen 5 und 6 ist bei der Abbildung 7 jedoch der Sensor 11 in zwei unterschiedliche Funktionsblöcke 1 b und 1 c aufgeteilt.

Aus dem vom Sensor 11 und dem dort zugeordneten Positionswandler 7 wird demzufolge die absolute Lageposition 16 berechnet und über den sicheren Kanal 38 als sichere Daten 41 der Kontrolleinheit 5 zugeführt.

Ebenso wird in der Funktionseinheit 2 das Interface für die Anordnung der sicheren Kanäle 37 und 38 vorgesehen, wobei jedoch eine höhere Integration dieser Funktionseinheit 2 dadurch stattfindet, dass ausgehend von dem Positionswandler 6 und der dort ermittelten Lageposition 9 nunmehr auch eine Berechnung des Lagewertes aus den inkrementalen Messwerten 42 des Positionswandlers 6 in Verbindung mit einem Startwert 32 erfolgt.

In der Funktionseinheit 2 ist noch eine Signalaufbereitung 21 angeordnet, wobei im Ausführungsbeispiel nach den Abbildungen 5 und 6 eine weitere Signalaufbereitung 22 der Funktionseinheit 1 b zugeordnet war.

Der ADC 24 wird benötigt, um eine Diagnose auszuführen, um nämlich festzustellen, ob die erfassten Sinus-Kosinus-Signale noch in einem gültigen Bereich liegen, so dass eine sichere Zählung gewährleistet ist. Dem ADC werden demzufolge die inkrementalen Werte übermittelt und nach dem Prinzip Sinus-Quadrat + Kosinus-Quadrat = konstant müssten die so erfassten inkrementalen Werte in einem bestimmten Fenster liegen. Dies wird durch den Überwachungsbaustein 25 festgestellt und einer Diagnose 13 mitgeteilt.

Die Ausführungsbeispiele nach den Abbildungen 5 bis 7 zeichnen sich dadurch aus, dass eine Übermittlung nicht nur über zwei sichere Kanäle 39, 40 erfolgt, sondern dass noch ein dritter sicherer Kanal 41 hinzukommt, der die Sicherheit der Datenübertragung noch zusätzlich erhöht, weil alle sicheren Daten auf allen drei Kanälen von der Kontrolleinheit 5 überprüft werden.

Im Ausführungsbeispiel nach Figur 7 ist die Funktionseinheit 1 mit der Unterfunktionseinheit 1 b und 1 c aufgeteilt. Die Funktionseinheit 1 b ist dann als Sensorblock ausgebildet, während die Funktionseinheit 1 c als Signalprozessorblock ausgebildet ist. Eine solche Aufteilung in einen Sensorblock und in einen Signalprozessorblock (Funktionseinheit 1 c) ist günstig, weil die Funktionseinheit 1 c als handelsüblicher Mikroprozessor ausgebildet sein kann, dessen Kosten sehr niedrig sind. Man kann also standardisierte Komponenten verwenden und den Sensorbereich bezüglich der Funktionseinheit 1 b von dem Signalprozessorbereich bezüglich der Funktionseinheit 1 c und Funktionseinheit 2 voneinander trennen.

Es ist selbstverständlich auch möglich, dass Prinzip der Aufteilung nach Abbildung 7 in einen Sensorblock und in einen Signalprozessorblock auch bei der Funktionseinheit 1 a durchzuführen. In analoger Weise würde dann der Positionswandler 6 in einer einzigen Funktionseinheit angeordnet werden und der rechts daneben stehende Block würde dann als weitere Signalprozessoreinheit mit der Diagnose 12, der Lageposition 9, der Logik 17 und der Signalaufbereitung 20 als getrennter Signalprozessorblock ausgebildet sein.

Die Erfindung verwendet im Übrigen für die Übermittlung der Daten auf den angegebenen Kanälen zur Einleitung in die Kontrolleinheit sogenannte sichere Protokolle. Jedem Datenblock, der übertragen wird, werden Prüfbits oder Schlüsselinformationen zugeordnet, so dass es in einer Weiterbildung der Erfindung vorgesehen sein kann, dass entweder in der Funktionseinheit 1 oder den dieser Funktionseinheit untergeordneten Funktionseinheiten 1 a, 1 b, 1 c und/oder der Funktionseinheit 2 ein Verschlüsselungsbaustein angeordnet ist, der verschlüsselte Daten über die vorher beschriebenen Kanäle sendet, die erst in der Kontrolleinheit 5 wieder entschlüsselt und verifiziert werden.

**Zeichnungslegende**

| | | | |
|---|---|---|---|
| 1 | Funktionseinheit 1 | 29 | Pfad inkremental |
| 1a | Funktionseinheit 1 | 30 | Pfad absolut |
| 1b | Funktionseinheit 1 | 31 | Pfad |
| 1c | Funktionseinheit 1 | 32 | Startwert |
| 2 | Funktionseinheit 2 | 34 | |
| 2' | Funktionseinheit 2+ | 35 | |
| 3 | Funktionseinheit 3 | 36 | Auf-/Abwärtszähler |
| 4 | Funktionseinheit | 37 | sicherer Kanal |
| 5 | Kontrolleinheit CU | 38 | sicherer Kanal |
| 6 | Positionswandler | 39 | sichere Daten |
| 7 | Positionswandler | 40 | sichere Daten |
| 8 | Lage-Position 1 | 41 | sichere Daten |
| 9 | Lage-Position 2 | 42 | inkrementale Messwerte |
| 10 | Sensor | 43 | absolute Messwerte |
| 11 | Sensor | | |
| 12 | Diagnose | | |
| 13 | Diagnose | | |
| 14 | Diagnose | | |
| 15 | Diagnose a, b | | |
| 16 | Lage-Position 3 | | |
| 17 | Logik | | |
| 18 | Logik | | |
| 19 | Interpolation | | |
| 20 | Signalaufbereitung 1 | | |
| 21 | Signalaufbereitung 2 | | |
| 22 | Signalaufbereitung 1b | | |
| 23 | Signalaufbereitung 1c | | |
| 24 | ADC | | |
| 25 | Überwachung | | |
| 26 | Umdrehungszähler 1a | | |
| 27 | Umdrehungszähler 1b | | |
| 28 | Pfad absolut | | |

## Patentansprüche

1. Verfahren zum Betrieb eines mehrkanaligen Drehwinkelgebers mit mindestens einer Leiterplatte, auf der eine oder mehrere Funktionseinheiten (1, 1 a, 1 b, 1 c, 2, 3, 4) als integrierte Bauteile angeordnet und miteinander verschaltet sind, wobei mindesten ein Positionswandler (6, 7) absolute und inkrementale Messwerte erzeugt, die jeweils über mindestens einen Kanal (37, 38) einer Kontrolleinheit (5) zugeführt werden, welche als Regelungs- und Sicherheitsüberwachung ausgebildet ist und eine nachgeschaltete Maschine steuert, **dadurch gekennzeichnet, dass** der Drehwinkelgeber mindestens eine Funktionseinheit (4) aufweist, in der der Positionswandler (6) angeordnet ist, der absolute und inkrementale Positionswerte (28, 29) erzeugt, welche mit Hilfe eines Interpolationsbausteins (19) und eines Quadratur Encoder Interfaces (36) in zueinander redundante Lage-Positionen (8, 9) umgerechnet werden, die auf zwei Kanälen als sichere Daten (39, 40) der Kontrolleinheit (5) zugeführt werden.

2. Verfahren nach Anspruch 1, **dadurch gekennzeichnet, dass** der Drehwinkelgeber aus mindestens zwei Funktionseinheiten (1, 2) besteht, dass in einer ersten Funktionseinheit (1) der Positionswandler (6) angeordnet ist, der in dieser Funktionseinheit (1) mit Hilfe des Interpolationsbausteins (19) oder des Quadratur Encoder Interfaces (36) absolute und inkrementale Positionswerte (42, 43) als erste Lage-Positionswerte (8 oder 9) erzeugt und, dass diese Positionswerte (42, 43) über einen sicheren Kanal (37) durch eine zweite Funktionseinheit (2) als erste sichere Daten (39) der Kontrolleinheit (5) zugeführt werden, und dass in der zweiten Funktionseinheit (2) aus den inkrementalen Messwerten der ersten Funktionseinheit (1) mit Hilfe des Quadratur Encoder Interfaces (36) oder des Interpolationsbausteins (19) zweite Lage-Positionswerte (9 oder 8) errechnet werden und der Kontrolleinheit (5) als zweite sichere Daten (40) zugeführt werden.

3. Verfahren nach Anspruch 1, **dadurch gekennzeichnet, dass** der Drehwinkelgeber aus mindestens drei Funktionseinheiten (1, 2, 3) besteht, dass in einer ersten Funktionseinheit (1) der Positionswandler (6) angeordnet ist, der in dieser Funktionseinheit (1) absolute Lage-Positionswerte (9) erzeugt, die über einen ersten sicheren Kanal (37) durch eine als Interface geschaltete zweite Funktionseinheit (2) als erste sichere Daten (39) der Kontrolleinheit (5) zuführt, und dass der Positionswandler (6) seine inkrementalen Messwerte einer dritten Funktionseinheit (3) zuleitet, die mit Hilfe des Interpolationsbausteins (19) und des Quadratur Encoder Interfaces (36) absolute Lage-Positionswerte (8) erzeugt und über einen zweiten sicheren Kanal (38) durch die zweite Funktionseinheit (2) hindurch als zweite sichere Daten (40) der Kontrolleinheit (5) r zuführt.

4. Verfahren nach Anspruch 1, **dadurch gekennzeichnet, dass** der Drehwinkelgeber aus mindestens drei Funktionseinheiten (1 a, 1 b, 2) besteht, dass in einer ersten Funktionseinheit (1a) ein erster Positionswandler (6) angeordnet ist, der in dieser Funktionseinheit (1a) mit Hilfe des Interpolationsbausteins (19) absolute Lage-Positionswerte (9) erzeugt, die über einen ersten sicheren Kanal (37) durch eine als Interface geschaltete zweite Funktionseinheit (2) als erste sichere Daten (39) der Kontrolleinheit (5) zuführt, und dass in einer zweiten Funktionseinheit (1b) ein zweiter Positionswandler (7) angeordnet ist, der dritte absolute Lage-Positionen (16) erfasst und über einen dritten sicheren Kanal (38) der Kontrolleinheit 5 zuführt, und dass in der als Interface geschalteten zweiten Funktionseinheit (2) mit Hilfe eines Signalaufbereitungsbausteins (21) und des Quadratur Encoder Interfaces (36) eine Umrechnung der inkrementellen Positionswerte (42) aus der ersten Funktionseinheit (1a) zu absoluten Lage-Positionswerten (9) erfolgt, die als zweite sichere Daten (40) der Kontrolleinheit (5) zugeführt werden.

5. Verfahren nach Anspruch 1, **dadurch gekennzeichnet, dass** der Drehwinkelgeber aus mindestens vier Funktionseinheiten (1a,1b, 1c, 2) besteht, dass in einer ersten Funktionseinheit (1a) ein erster Positionswandler (6) angeordnet ist, der in dieser Funktionseinheit (1a) absolute Lage-Positionswerte (9) erzeugt, die über einen ersten sicheren Kanal (37) durch eine als Interface geschaltete zweite Funktionseinheit (2) als erste sichere Daten (39) der Kontrolleinheit (5) zuführt, und dass in einer dritten Funktionseinheit (1b) ein zweiter Positionswandler (7) angeordnet ist, der dritte absolute Lage-Positionen (16) erfasst und aufbereitet und an eine als Signalprozessor-Einheit ausgebildete vierte Funktionseinheit (1c) zuführt, welche hieraus eine absolute Lage-Position (16) berechnet und über einen dritten sicheren Kanal (38) der Kontrolleinheit (5) zuführt, und dass in der als Interface geschalteten zweiten Funktionseinheit (2) mit Hilfe des Interpolationsbausteins (19) und des Quadratur Encoder Interfaces (36) eine Umrechnung der inkrementellen Positionswerte (42) aus der ersten Funktionseinheit (1a) zu absoluten Lage-Positionswerten (8) erfolgt, die als zweite sichere Daten (40) der Kontrolleinheit (5) zugeführt werden.

## Claims

1. Method for operation of a multi-channel angular position sensor comprising at least one printed circuit board on which one or more functional units (1, 1a, 1b, 1c, 2, 3, 4) are arranged as integrated components and connected with one another, wherein at least one position transducer (6, 7) generates absolute and incremental measurements which are each fed via at least one channel (37, 38) to a control unit (5) which is embodied in the form of a regulating and safety monitoring unit and controls a machine which is connected downstream, **characterised in that** the angular position sensor has at least one functional unit (4) in which is arranged the position transducer (6) which generates absolute and incremental position values (28, 29) which are converted with the aid of an interpolation module (19) and a quadrature encoder interface (36) into mutually redundant positions (8, 9) which are fed to the control unit (5) on two channels as secure data (39, 40).

2. Method according to claim 1, **characterised in that** the angular position sensor consists of at least two functional units (1, 2), **in that** arranged in a first functional unit (1) is the position transducer (6) which in this functional unit (1) generates absolute and incremental position values (42, 43) as first position values (8 or 9) with the aid of the interpolation module (19) or the quadrature encoder interface (36), and **in that** these position values (42, 43) are fed to the control unit (5) via a secure channel (37) through a second functional unit (2) as first secure data (39), and **in that** in the second functional unit (2) second position values (9 or 8) are calculated from the incremental measurements of the first functional unit (1) with the aid of the quadrature encoder interface (36) or the interpolation module (19) and fed to the control unit (5) as second secure data (40).

3. Method according to claim 1, **characterised in that** the angular position sensor consists of at least three functional units (1, 2, 3), **in that** arranged in a first functional unit (1) is the position transducer (6) which in this functional unit (1) generates absolute position values (9) which are fed to the control unit (5) via a first secure channel (37) through a second functional unit (2) connected as an interface as first secure data (39), and **in that** the position transducer (6) passes its incremental measurements to a third functional unit (3) which generates absolute position values (8) with the aid of the interpolation module (19) and the quadrature encoder interface (36) and feeds them to the control unit (5) via a second secure channel (38) through the second functional unit (2) as second secure data (40).

4. Method according to claim 1, **characterised in that** the angular position sensor consists of at least three functional units (1a, 1b, 2), **in that** arranged in a first functional unit (1a) is a first position transducer (6) which in this functional unit (1a) with the aid of the interpolation module (19) generates absolute position values (9) which are fed to the control unit (5) via a first secure channel (37) through a second functional unit (2) connected as an interface as first secure data (39), and **in that** arranged in a second functional unit (1b) is a second position transducer (7) which detects third absolute positions (16) and feeds them to the control unit (5) via a third secure channel (38), and **in that** in the second functional unit (2) connected as an interface with the aid of a signal preparation module (21) and the quadrature encoder interface (36) the incremental position values (42) from the first functional unit (1a) are converted into absolute position values (9) which are fed to the control unit (5) as second secure data (40).

5. Method according to claim 1, **characterised in that** the angular position sensor consists of at least four functional units (1a, 1b, 1c, 2), **in that** arranged in a first functional unit (1a) is a first position transducer (6) which in this functional unit (1a) generates absolute position values (9) which are fed to the control unit (5) via a first secure channel (37) through a second functional unit (2) connected as an interface as first secure data (39), and **in that** arranged in a third functional unit (1b) is a second position transducer (7) which detects and prepares third absolute positions (16) and feeds them to a fourth functional unit (1c) embodied in the form of a signal processor unit which calculates an absolute position (16) from these and feeds this to the control unit (5) via a third secure channel (38), and **in that** in the second functional unit (2) connected as an interface with the aid of the interpolation module (19) and the quadrature encoder interface (36) the incremental position values (42) from the first functional unit (1a) are converted into absolute position values (8) which are fed to the control unit (5) as second secure data (40).

## Revendications

1. Procédé pour le fonctionnement d'un détecteur d'angle de rotation multicanal avec au moins une carte imprimée sur laquelle une ou plusieurs unités fonctionnelles (1, la, 1b, 1c, 2, 3, 4) sont disposées sous la forme de composants intégrés et sont reliées entre elles, au moins un transducteur de position (6, 7) générant des valeurs de mesure absolues et incrémentales qui sont transmises par l'intermédiaire d'au moins un canal respectif (37, 38) à une unité de contrôle (5) qui est conçue comme une surveillance de régulation et de sécurité et qui commande une machine montée en aval,
**caractérisé en ce que** le détecteur d'angle de rotation comporte au moins une unité fonctionnelle (4) dans laquelle est disposé le transducteur de position (6) générant des valeurs de position absolues et incrémentales (28, 29) qui sont converties à l'aide d'un module d'interpolation (19) et d'une interface d'encodeur en quadrature (36) en positions d'emplacement (8, 9) redondantes l'une par rapport à l'autre, lesquelles sont transmises sur deux canaux, sous la forme de données sécurisées (39, 40), à l'unité de contrôle (5).

2. Procédé selon la revendication 1, **caractérisé en ce que** le détecteur d'angle de rotation se compose d'au moins deux unités fonctionnelles (1, 2), **en ce que** dans une première unité fonctionnelle (1) est disposé le transducteur de position (6), qui génère dans cette unité fonctionnelle (1), à l'aide du module d'interpolation (19) où de l'interface d'encodeur en quadrature (36), des valeurs de position absolues et incrémentales (42, 43) comme premières valeurs de position d'emplacement (8 ou 9), **en ce que** ces valeurs de position (42, 43) sont transmises par l'intermédiaire d'un canal sécurisé (37), par une deuxième unité fonctionnelle (2), sous la forme de premières données sécurisées (39), à l'unité de contrôle (5), et **en ce que** dans la deuxième unité fonctionnelle (2), des deuxièmes valeurs de position d'emplacement (9 ou 8) sont calculées à partir des valeurs de mesure incrémentales de la première unité fonctionnelle (1) à l'aide de l'interface d'encodeur en quadrature (36) ou du module d'interpolation (19), et sont transmises à l'unité de contrôle (5) sous la forme de deuxièmes données sécurisées (44).

3. Procédé selon la revendication 1, **caractérisé en ce que** le détecteur d'angle de rotation se compose d'au moins trois unités fonctionnelles (1, 2, 3), **en ce que** dans une première unité fonctionnelle (1) est disposé le transducteur de position (6), qui génère dans cette unité fonctionnelle (1) des valeurs de position d'emplacement absolues (9) qui sont transmises par l'intermédiaire d'un premier canal sécurisé (37), par une deuxième unité fonctionnelle (2) montée comme interface, sous la forme de premières données sécurisées (39), à l'unité de contrôle (5), et **en ce que** le transducteur de position (6) transmet ses valeurs de mesure incrémentales à une troisième unité fonctionnelle (3) qui génère à l'aide du module d'interpolation (19) et de l'interface d'encodeur à quadrature (36) des valeurs de position d'emplacement absolues (8) et les transmet par l'intermédiaire d'un deuxième canal sécurisé (38), à travers la deuxième unité fonctionnelle (2), sous la forme de deuxièmes données sécurisées (40) à l'unité de contrôle (5).

4. Procédé selon la revendication 1, **caractérisé en ce que** le détecteur d'angle de rotation se compose d'au moins trois unités fonctionnelles (1a, 1b, 2), **en ce que** dans une première unité fonctionnelle (la) est disposé un premier transducteur de position (6), qui génère dans cette unité fonctionnelle (la), à l'aide du module d'interpolation (19), des valeurs de position d'emplacement absolues (9) qui sont transmises par l'intermédiaire d'un premier canal sécurisé (37), par une deuxième unité fonctionnelle (2) montée comme interface, sous la forme de premières données sécurisées (39), à l'unité de contrôle (5), et **en ce que** dans une deuxième unité fonctionnelle (1b) est disposé un deuxième transducteur de position (7) qui détecte des troisièmes positions d'embplacement absolues (16) et les transmet par l'intermédiaire d'un troisième canal sécurisé (38) à l'unité de contrôle (5), et **en ce que** dans la deuxième unité fonctionnelle (2) montée comme interface a lieu, à l'aide d'un module de traitement de signaux (21) et de l'interface d'encodeur en quadrature (36), une conversion des valeurs de position incrémentales (42) provenant de la première unité fonctionnelle (1a) en valeurs de position d'emplacement absolues (9) qui sont transmises sous la forme de deuxièmes données sécurisées (40) à l'unité de contrôle (5).

5. Procédé selon la revendication 1, **caractérisé en ce que** le détecteur d'angle de rotation se compose d'au moins quatre unités fonctionnelles (1a, 1b, 1c, 2), **en ce que** dans une première unité fonctionnelle (1a) est disposé un premier transducteur de position (6), qui génère dans cette unité fonctionnelle (1a) des valeurs de position d'emplacement absolues (9) qui sont transmises par l'intermédiaire d'un premier canal sécurisé (37), par une deuxième unité fonctionnelle (2) montée comme interface, sous la forme de premières données sécurisées (39), à l'unité de contrôle (5), et **en ce que** dans une troisième unité fonctionnelle (1b) est disposé un deuxième transducteur de position (7) qui détecte et traite des troisièmes positions d'emplacement absolues (16) et les transmet à une quatrième unité fonctionnelle (1c), conçue comme une unité de processeur de signaux, qui calcule à partir de là une position d'emplacement absolue (16) et la transmet par l'intermédiaire d'un troisième canal sécurisé (38) à l'unité de contrôle (5), et **en ce que** dans la deuxième unité fonctionnelle (2) montée comme interface a lieu, à l'aide du module d'interpolation (19) et de l'interface d'encodeur en quadrature (36), une conversion des valeurs de position incrémentales (42) provenant de la première unité fonctionnelle (1a) en valeurs de position d'emplacement absolues (8) qui sont transmises sous la forme de deuxièmes données sécurisées (40) à l'unité de contrôle (5).
